# EUROPÄISCHE PATENTANMELDUNG

(11) **EP 1 675 085 A1**
(43) Veröffentlichungstag der Anmeldung: **28.06.2006**
(21) Anmeldenummer: 03817671.5
(22) Anmeldetag: 25.07.2003
(51) Int. Cl.: G09B 9/08

(54) **FLUGSIMULATOR**

(71) Anmelder: Baranov, Nikolai Alekseevich, Moscow, 109153 (RU); Belotserkovski, Andrei Sergeevich, Moscow, 125167 (RU); Kanevski, Mikhail Igorevich, Moscow, 127572 (RU); Pasekunov, Igor Vladimirovich, Moscow, 123481 (RU); ZAKRYTOE AKTSIONERNOE OBSCHESTVO ROSSIYSKAYA AKTSIONERNAYA ASSOTSIATSIYA "SPETSTEKHNIKA", Moskovskaya obl., 141980 (RU); G.U. "FEDERALNOE AGENTSTVOPO PO PRAVOVOI ZASCHITE REZULATOV INTELLEKTUALNOI DEYATELNOSTI VOENNOGO, SPETSIALNOGO I DVOINOGO NAZNACHENIYA" P.M.Y, Moscow, 109028 (RU)
(72) Erfinder: Baranov, Nikolai Alekseevich, Moscow, 109153 (RU); Belotserkovski, Andrei Sergeevich, Moscow, 125167 (RU); Kanevski, Mikhail Igorevich, Moscow, 127572 (RU); Pasekunov, Igor Vladimirovich, Moscow, 123481 (RU); ZAKRYTOE AKTSIONERNOE OBSCHESTVO ROSSIYSKAYA AKTSIONERNAYA ASSOTSIATSIYA "SPETSTEKHNIKA", Moskovskaya obl., 141980 (RU); G.U. "FEDERALNOE AGENTSTVOPO PO PRAVOVOI ZASCHITE REZULATOV INTELLEKTUALNOI DEYATELNOSTI VOENNOGO, SPETSIALNOGO I DVOINOGO NAZNACHENIYA" P.M.Y, Moscow, 109028 (RU)
(74) Vertreter: Jeck, Anton
(86) Internationale Anmeldenummer: PCT/RU2003/000333
(87) Internationale Veröffentlichungsnummer: WO 2005/010848

(57) **Zusammenfassung**

Die Erfindung liegt in Form eines Flugsimulators unter den Bedingungen der Luftverwirbelungsgefahr und unter Bedingungen vor, bei denen ein Pilot über die Möglichkeit informiert wird, in den genannten Gefahrenbereich der Verwirbelungsfahnen, die durch einen Verwirbelungsgenerator erzeugt werden, einzudringen. Der Simultor gemäß der Erfindung ist in Form von modularen Varianten verkörpert und umfasst ein Modul (9) zur Nachbildung der Verwirbelungsbedingungen zur Bestimmung der Flugbahn und der Stärke der Verwirbelungsfahnen des Verwirbelungsgenerators als Besetzung der Wirbelbewegungsbereiche, ein Modul (10) zur Nachbildung der Tätigkeit der Wirbelstörungen an einem Flugzeug und zur Bestimmung von zusätzlichen Kräften und Drehmomenten, die durch die Verwirbelungsfahnen des Verwirbelungsgenerators hervorgerufen werden, ein Modul (17) für die Parameter des Gefahrenbereichs der Wirbelstörungen und ein Warnmodul zur Berechnung der Wirbelstörungsgefahr an einer modulierten Kontrollebene, die vor dem Flugzeug in einem vorgesehenen Abstand liegt, der demjenigen Abstand entspricht, der vom Flugzeug während einer ausgewählten Voraussagezeit erfasst wird und der für das Ausführen eines Flugmanövers durch das Flugzeug zum Wegbewegen ausreicht.

## Beschreibung

Die Erfindung gehört zur Flugtechnik, insbesondere zu Flugsimulatoren bzw. Flugtrainingsgeräten zur Pilotenausbildung für Verfahren der Flugzeuglenkung und der Fluglotsenschulung für die Luftverkehrslenkung bei unterschiedlichen Flugbedingungen, vorzugsweise beim Starten und Landen, sowie für das Vermeiden von außerordentlichen Flugsituationen.

Heutzutage sind in der Weltpraxis zwei Typen oberirdischer Simulatoren bekannt, wobei der eine für die Pilotenschulung für Lenkungsverfahren bei unterschiedlichen Flugbedingungen mittels einer Simulation der im Flug entstehenden, verschiedenen Situationen vorgesehen ist und der andere zur Schulung für Pilotenrettungsverfahren mittels einer Simulation von Notfallsituationen bestimmt ist.

Durch den Artikel "Flugtrainingsgeräte und Flugsicherheit", Moskau, Luftverkehrsmittel, 1991, S. 15, der Verfasser G. Sch. Meerowitsch et al, ist ein Link-Trainingsgerät bekannt, das ein vereinfachtes Modell eines Einsitzers mit Cockpit darstellt, wobei das Trainingsgerät in einem universellen Gelenk befestigt ist und dem Flugzeug ermöglicht, den simulierten Flug mit variablen Stampf-, Wind- und Krängungswinkeln durchzuführen. Im Simulator ist ein Fluglehrer vorgesehen, der die Lenkung nach einem vorgegebenen Programm überwacht. In solchen Trainingsgeräten ist aber die Simulation von Notfallsituationen und ein Durcharbeiten von Pilotenhandlungen in solchen Situationen nicht vorgesehen.

Durch dieselbe Veröffentlichung, wie vorher angegeben, ist auf den Seiten 28-31 ein komplexer Flugsimulator bekannt, der ein Cockpit für die Besatzung mit einer Instrumententafel, die mit Simulatoren der benötigten Standardgeräte ausgestattet ist, ein Lenkungssystem, Arbeitsplätze für die Piloten, ein Simulationssystem der Außenumgebung, ein Beweglichkeitssystem, einen Rechenkomplex sowie Fluglehrer- und Flugzeugführertafeln umfasst. Das Trainingsgerät ist zum Trainieren von Lenkungsverfahren, Lenkungsfähigkeiten in unterschiedlichen Flugschritten oder in bestimmten, außerordentlichen Situationen vorgesehen. Im Schulungsprogramm fehlt aber eine Simulation von Notfallsituationen.

Bekannt ist ferner durch die RU 2191432 C1 ein virtueller Flugzeugsimulator, der einen Arbeitsplatz für den Pilotenschüler im Cockpit eines wirklichen Flugzeugs, Systemblöcke zur objektiven Kontrolle und Lenkung der Ausstattung, einen Adapter, dessen Ausgang mit dem Eingang im Pilotenhelm, in dem eine Datensendung bzw. ein Datenempfang vom Block der oberirdischen Flugdatenverarbeitung erfolgt, mit einer virtuellen Brille verbunden ist, ein Modul zur Wiedergabe von Flugdaten, ein Modul zum Vergleich von Lenkungsparametern im Flug und in der Simulation, ein Modul von Konfiguration und Zugang zu Flugdaten, ein Modul zur Erkennung der Navigationselemente, ein Modul zur Animation der Instrumententafel und des Außenluftraums, ein Modul zur Flugvorbereitung und Testen, ein Modul mit einer Datenbank aus berechneten und registrierten Parametern im Flug und ein Modul zur Kontrolle und Lenkung des Trainingsplans aufweist.

Durch die RU 2114460 C1 ist eine Vorrichtung zur Durchführung eines Trainingsflugs bekannt, die ein wirkliches Flugzeug mit Lenkungsorganen, Flugzeugaggregaten und Systemen, Sensoren und ein automatisches Lenkungssystem, an das Sensoren und Kraftlenkungsorgane angeschlossen sind, Blöcke zur Simulation der Geländegestaltung, Erzeugungsblöcke und Bildschirme zur Abbildung visueller Außensituation, Blöcke zum Datenaustausch mit der Lenkungsstelle und mit anderen Flugzeugen im Fall eines Gruppenflugs, einen Block mit einer Datenbank des Trainingsflugs, einen Block zur Signalverarbeitung, der eine Rechenvorrichtung für navigatorische Parameter enthält, Simulationsblöcke von akustischen Effekten, einen Simulationsblock der Flugdynamik, einen Block zur Erstellung der Abbildung von Instrumententafeln und einen Simulationsblock des Betriebs von Aggregaten und Systemen eines Flugzeugs umfasst.

Durch die RU 2087037 C1 ist ein einheitlicher Mehrzweckflugsimulator bekannt, der ein Rechensystem mit Programmmodulen zur Durchführung von Trainingsszenarien der objektiver Kontrolle des Flugschülers und -lehrers, einen einheitlichen Fluglehrerarbeitsplatz, einheitliche Schülerarbeitsplätze, eine Vorrichtung zur Eingabe von Flugdaten und eine Datenbank mit Trainingsszenarien aufweist. Das Rechensystem sichert dabei die Simulation der Fluglenkung, der nicht beherrschten Bewegung beim Ausfall oder Zerstörung der Lenkung und der Wiedergabe von Flugdaten auf der Instrumententafel oder im Visualisierungssystem. Darüber hinaus sichert es eine mit den Flugzuständen adäquate Beladung des Lenkungsgriffs und die Eingabe von typischen Notfallsituationen anhand der Fluglehrerliste, die von technischen Ausfällen oder Lenkungsfehlern verursacht werden. Das Rechensystem sichert auch den Betrieb der auf der Instrumententafel oder auf der Cockpitscheibe angeordneten Vorrichtungen zur Warn- und Alarmanzeige für den Piloten.

Die im Trainingsgerät simulierten Notfallsituationen können durch die Simulation von charakteristischen Außenerscheinungen, wie Rütteln, Änderung der Stampf- und Krängungswinkel sowie anderen Erscheinungen, begleitet werden.

Der Simulator erlaubt aber, eine Schulung ausschließlich aufgrund von Fallbeispielen typischer Notfallsituationen durchzuführen.

In einer wirklichen Situation, beispielsweise beim Flug, beim Steig- und Sinkflug, droht dem Flugzeug die Gefahr der Einwirkung aerodynamischer Kräfte und Momente, deren Einwirkung von Bedeutung sein und zum Stabilitätsverlust führen kann, beispielsweise beim Flug in der Situation, in der die Flugsicherheit bestimmende Faktor die Einwirkung aerodynamischer Ströme mit starker Turbulenz ist, die sowohl bei der Bewegung eines stromerzeugenden Objekts in der Umgebung des fliegenden Flugfahrzeugs als auch in Gegenwart anderer Objekte in der Umgebung des Flugzeugs, die von Luftströmungen mit starker Turbulenz und Wirbelung umflossen werden, entstehen.

Es ist allgemein bekannt, dass bei der Bewegung des Flugzeugs im Luftraum eine so genannte Wirbelschleppe erzeugt wird, die von der das Flugzeug umflossenen Luftströmung gebildet wird. Der Einflug eines Flugzeugs in die Wirbelschleppe eines anderen Flugzeugs führt zu einer wesentlichen Änderung des Angriffswinkels und des Gleitwinkels. Das Flugzeug wird in diesem Fall aerodynamischen Kräften und Momenten ausgesetzt, die das Flugzeug beispielsweise seitlich von der Schleppe verschieben können und in kleineren Höhen, beispielsweise beim Landen oder Starten, zu außerordentlichen Situationen wegen der Unmöglichkeit, diese Einwirkung mittels Lenkungsorganen des Flugzeugs zu kompensieren, führen können.

Die Entwicklung von Flugzeugen kleiner Spannweite mit großer spezifischer Beanspruchung führen zu einer Erhöhung der Wirbelschleppenintensität, wodurch die Einfluggefahr des Flugzeugs in diese Schleppe erhöht wird.

Viele Untersuchungen der Ausbreitung und Alterung der Wirbel zeigten, dass die atmosphärischen Faktoren, wie Wind, Windverschiebung, Luftschichtung und Turbulenz, große Bedeutung für diese Prozesse haben.

Es besteht eine potenzielle Optimierungsmöglichkeit eines Sicherheitsabstands zwischen den Flugzeugen beim Landen, Starten und im Flug aufgrund einer zuverlässigen Prognose der Wirbelschleppenentwicklung unter Einsatz laufender und kurzzeitiger Prognosen entsprechender meteorologischer Bedingungen sowie der Wirkung atmosphärischer Bedingungen und der Erdnähe auf die Wirbelschleppenentwicklung.

Eine der Problemlösungen der Flugsicherheit in der Situation, in der der bestimmende Faktor die aerodynamische Wirbelschleppe ist, ist die Wahl der Flugzustände, die das vorgegebene Sicherheitsniveau gewährleisten. Deswegen sollte beim Pilotentraining eine große Aufmerksamkeit auf die Erarbeitung von Fertigkeiten zur Abschätzung unterschiedlicher Flugsituationen und zum Treffen von Entscheidungen über ein Manöver gerichtet werden.

Im Vergleich zu inländischen Flugsicherheitssystemen, die im Wesentlichen auf die Pilotenhandlungen anhand von selbständigen Auswertungen der Situation und Flugbedingungen ausgerichtet werden, sind die ausländischen Sicherheitssysteme meistens auf den Einsatz von so genannten Instrumentenflugregeln ausgerichtet, wobei die Lenkung des Flugzeugs aufgrund der Lotsenanweisungen in der direkten oder automatischen Arbeitsweise durchgeführt wird. Hier sollen Piloten und Fluglotsen aufgrund gleicher Fallbeispiele des möglichen Einflugs eines Flugzeugs in die Wirbelschleppengefährdungszone geschult werden, um Fertigkeiten zu einer angemessenen Situationsabschätzung und Lösung zur Vermeidung der Gefahrensituation zu erarbeiten.

Die Möglichkeit, eine Simulation der zu einem möglichen Unfall führenden Einwirkungen auf Piloten und Fluglotsen mit hoher Glaubwürdigkeit zu gewährleisten, ist eine äußerst aktuelle Aufgabe.

Die Trainingsaufgabe besteht in der Bildung einer Vorgehensweise mittels einer Mehrzahl visueller Informationen und Signalinformation, über die der Pilot oder Lotse verfügt, wobei eine Stresssituation simuliert und die benötigte Vorgehensweise durchgearbeitet wird. Dabei wird beim Piloten oder Lotsen ein Bild der grafischen Reihenfolge im Gedächtnis hervorgerufen und die Aufmerksamkeit auf Empfindungen konzentriert.

Es ist auch bekannt, dass bei der Fluglotsentätigkeit das Treffen von Entscheidungen in den außerordentlichen Situationen sehr schwierig ist. Das Treffen von Entscheidungen besteht aus zwei Schritten, einerseits das Erkennen der Situation und andererseits die Festlegung der Vorgehensweise zur Beseitigung der Gefahrensituation. Bevor der Lotse den nächsten Tätigkeitsschritt ausführt, muss er seine weiteren Schritte vorhersehen. Die Aufnahme von visuellen Signalen und Sprechsignaien in Worten durch Dauerspeicher, visuelle Mittel oder das Gehör benötigt eine gewisse Zeit in einer Situation des Zeitmangels. Die Aufnahmezeit grafischer Symbole ist wesentlich kürzer; die Erkennung der Situation mittels einer Anzeige markierter Abbildungszonen erlaubt die Angemessenheit des Entscheidungstreffens. Ferner führt die Wirkung der Beschleunigung zu einer Störung des Gehirnblutflusses beim Piloten und kann bei einer emotionellen Überanstrengung zu einer kurzzeitigen Bewusstseinslosigkeit führen. Deswegen wird bevorzugt, dem Piloten oder Fluglotsen die benötigten Informationen vor dem Entscheidungstreffen und in grafischen Symbolen zur Verfügung zu stellen.

Das Ziel der Erfindung ist die Entwicklung eines Trainingsgeräts zur Schulung in Flugverfahren unter Wirbelgefährdungsbedingungen und die Ausbildung von Fertigkeiten, um ein Ausweichmanöver vor den Wirbelschleppengefährdungszonen durchzuführen.

Die Erfindung hat sich zum Ziel gesetzt, ein Trainingsgerät zu entwickeln, das dem auszubildenden Piloten die für ihn benötigten Informationen über den Einwirkungscharakter der Wirbelströme auf das Flugzeug zur Verfügung stellt, die für die Auswertung der Wirbelsituation im prognostizierenden Zeitpunkt und zur Wahl eines Ausweichmanövers zur Vermeidung des Einflugs in die Wirbelschleppengefährdungszone mittels einer Bestimmung der Wirbelschleppenbahn und -intensität und mittels einer Erkennung der Punkte im Raum, in denen die prognostizierenden, wirbelinduzierenden Einwirkungen im prognostizierenden Zeitpunkt zu den außerordentlichen Situationen führen können, ausreichend sind.

Die gestellte Aufgabe wird durch die Entwicklung eines Flugtrainingsgeräts zur Schulung der Flugdurchführung in Wirbelgefährdungssituationen gelöst. Der Simulator enthält Folgendes:
- ein Modul zur Kontrolle und Lenkung von Trainingsflugbedingungen, das Trainingsszenarien auswählen und die Funktion der Module prüfen kann,
- ein Modul der Datenbank mit Trainingsszenarien,
- ein Modul zur Kommutation der Module des Simulators,
- ein Simulationsmodul der Außenumgebung, des sichtbaren Luftraumteils und der Erde in Realzeit,
- ein Simulationsmodul des Pilotenarbeitsplatzes,
- ein Simulationsmodul der Instrumententafel mit Anzeigegeräten der Motorenbetriebe,
- ein Simulationsmodul der Lenkungsorgane von Flugzeugaggregaten und
- systemen,
- ein Simulationsmodul der Umgebungsparameter,
- ein Simulationsmodul der Wirbelsituation, der aus Daten des Moduls von Trainingsszenarien über die Wirbelerzeugerparameter und Daten des Simulationsmoduls der Umgebungsparameter die Wirbelschleppenbahn und -intensität als Gesamtheit der Mittelpunkte von Wirbelbereichen bestimmen kann,
- ein Simulationsmodul der Einwirkung von Wirbelströmen auf das Flugzeug, der aus Daten des Wirbelsimulationsmoduls über die Wirbelschleppenbahn und -intensität und aus Daten des Moduls der Datenbank mit Trainingsszenarien über die Parameter des Flugzeugs und aus Daten des Simulationsmoduls der Dynamik des Flugzeugs über die Position, Bewegungs- und Winkelgeschwindigkeit sowie die geometrische Charakteristik des Flugzeugs die wirbelinduzierenden Zusatzkräfte und -momente bestimmen kann,
- ein Simulationsmodul der Flugzeugdynamik, der aus Daten des Simulationsmoduls der Wirbelstromeinwirkungen auf das Flugzeug, aus Daten des Moduls der Datenbank mit Trainingsszenarien und aus Daten des Simulationsmoduls der Lenkungsorgane Signale erzeugen kann, die die wirkenden Kräfte und Momente nach einem Trainingsszenario sowie wirbelinduzierende Zusatzkräfte und -momente simulieren und Signale in das Simulationsmodul des Pilotenarbeitsplatzes, in das Simulationsmodul der Instrumententafel und in das Simulationsmodul der Außenumgebung übermitteln kann und
- ein System zur Bewertung der Pilotenhandlungen, das aus Daten des Simulationsmoduls der visuellen Außensituation und des Simulationsmoduls der Instrumententafel die Richtigkeit der Pilotenhandlungen zur Beseitigung der für das Flugzeug gefährlichen Situation bewerten kann.

Dabei ist es gemäß der Erfindung sinnvoll, dass das Simulationsmodul des Pilotenarbeitsplatzes mit der Möglichkeit seiner räumlichen Änderung ausgeführt und mit Vorrichtungen zur dynamischen Flugsimulation ausgestattet wird.

Gemäß der Erfindung ist es auch wünschenswert, dass das Simulationsmodul der Wirbelsituation Folgendes enthält:
- einen Simulationsblock der Wirbelerzeugerdynamik, der umfasst eine Vorrichtung zur Überwachung des Wirbelerzeugers, die die Daten über die Position, Bewegungsparameter, geometrische Charakteristik und Massencharakteristik des Wirbelerzeugers vom Modul mit der Datenbank von Trainingsszenarien empfangen kann,
- eine Speichervorrichtung, die Daten über die Position und Bewegungsparameter des Wirbelerzeugers abspeichern kann,
- einen Wirbelschleppensimulationsblock, der eine Überwachungseinrichtung der Wirbelschleppe, die aus Daten vom Simulationsmodul der Umgebungsparameter und vom Simulationsblock der Wirbelerzeugerdynamik die Wirbelschleppenbahn und -intensität als Bahnengesamtheit der Mittelpunkte von Wirbelbereichen bestimmen kann,
- eine Speichervorrichtung, die Daten über die Koordinaten der Bahnpunkte und Wirbelschleppenintensität als Bahnengesamtheit der Mittelpunkte von Wirbelbereichen abspeichern kann, und der Simulationsmodul zur Einwirkung von Wirbelströmen auf das Flugzeug Folgendes enthält:

- einen Schematisierungsblock des Flugzeugs, der aus Daten über den Typ und die Konfiguration des Flugzeugs vom Modul der Datenbank mit den Trainingsszenarien die Gesamtheit der geometrischen Charakteristik des Flugzeugs, die zur Berechnung der wirbelinduzierenden Zusatzkräfte und -momente erforderlich sind, berechnen kann und
- einen Block zur Bestimmung der genannten Kräfte und Momente aus den im Wirbelschleppensimulationsblock gespeicherten Daten über die Koordinaten der Bahnpunkte und die Wirbelschleppenintensität als Bahnengesamtheit der Mittelpunkte von Wirbelbereichen und aus Daten über die Position, Bewegungs- und Winkelgeschwindigkeit sowie die geometrische Charakteristik des Flugzeugs vom Simulationsmodul der Flugzeugdynamik.
   Darüber hinaus kann das Trainingsgerät gemäß der Erfindung zusätzlich einen Simulationsmodul optischer, dynamischer und akustischer Effekte enthalten.

Ferner kann der Simulator gemäß der Erfindung an die Trainingsnavigation angepasst werden, wobei der auszubildende Pilot über einen prognostizierten, möglichen Einflug in die Wirbelschleppengefährdungszone informiert wird, und zusätzlich ein Modul der Parameter der Wirbelgefährdungszone enthalten, das Folgendes umfasst:
- einen Block zur Bestimmung des Gefährdungspotentials, der die Wirbelgefahr im vorgegebenen Raumpunkt nach dem festgelegten Gefährdungskriterium der auf das Flugzeug wirkenden, wirbelinduzierenden Zusatzkräfte und -momente aus Daten des Blocks zur Bestimmung der Kräfte und Momente im Simulationsmodul der Einwirkung der Luftströme auf das Flugzeug auswerten kann,
- einen Block zur Bestimmung der gefährlichen Raumpunktmenge, in denen wirbelinduzierende Zusatzkräfte und -momente eine Gefahr darstellen, und der die Koordinaten der in der Gefährdungszone befindlichen Raumpunkte nach einem Gefährdungskriterium aus Daten des Blocks zur Bestimmung des Gefährdungspotentials bestimmen kann,
- einen Block zur Bestimmung der Parameter der Wirbelgefährdungszone, der die geometrische Charakteristik aus Daten des Blocks zur Bestimmung gefährlicher Raumpunktmenge errechnen und Informationen darüber übermitteln kann, und ein Warnmodul enthalten, der Folgendes umfasst:

- einen Wählblock der Vorhaltezeit, in der mindestens ein Ausweichmanöver des Flugzeugs vor der Wirbelschleppe nach der Warnung über einen möglichen Einflug darin durchgeführt werden kann,
- einen Simulationsblock der Kontrollfläche, der den Vorhalteabstand, der dem in der Vorhaltezeit vom Flugzeug geflogenen Abstand gleich ist, errechnen und eine Kontrollfläche, die im Raum vor dem Flugzeug senkrecht zu dessen Bewegungsrichtung im Vorhalteabstand liegt, erstellen und den prognostizierenden Zeitpunkt der Überschneidung der Kontrollfläche im Inertialkoordinatensystem bestimmen kann,
- einen Prognoseblock, der die Wirbelschleppenbahn als Bahnengesamtheit der Mittelpunkte von Wirbelbereichen des Wirbelerzeugers und die Wirbelschleppenintensität im prognostizierenden Zeitpunkt im Inertialkoordinatensystem aus Daten des Simulationsblocks der Wirbelschleppen im Simulationsmodul der Wirbelsituation bestimmen kann,
- einen Rechenblock der Überschneidungspunkte, der die Koordinaten der Überschneidungspunkte der Wirbelschleppenbahn mit der Kontrollfläche im prognostizierenden Zeitpunkt der Überschneidung der Kontrollfläche durch das Flugzeug errechnen kann,
- einen Block zur Erstellung von Zonen und Bereichen, der die Erstellung der Wirbelschleppengefährdungszone um den Überschneidungspunkt der Wirbelschleppenbahn mit der Kontrollfläche, bei deren Überschneidung die Bewegungsparameter des Flugzeugs die zulässigen Grenzen überschreiten können, aus Daten des Moduls der Gefährdungszonenparameter, die Erstellung der unter Verwendung festgelegter Normen der Flugdurchführung prognostizierenden Flugzeugposition in der Kontrollfläche in der prognostizierenden Zeit der Kontrollflächeüberschneidung, die Erstellung eines Schwerpunktbereiches um den Bereich der prognostizierenden Positionen und die Übermittlung der Information über die Überschneidung mit der Wirbelschleppengefährdungszone an den Benutzer gewährleistet,
- einen Übergangsblock, der die Koordinaten des Bereichs der prognostizierenden Flugzeugpositionen, des Schwerpunktbereichs und der Wirbelschleppengefährdungszone im mit dem Flugzeug gekoppelten Koordinatensystem berechnen kann,
- einen ersten Prüfblock der Überschneidungsbedingungen, der den Abstand vom Schwerpunktbereich zur Wirbelschleppengefährdungszone bestimmen und den Nullabstand festlegen kann,
- einen zweiten Prüfblock der Überschneidungsbedingungen, der den Abstand vom prognostizierenden Bereich der Flugzeugpositionen zur Wirbelschleppengefährdungszone bestimmen und den Nullabstand festlegen kann,
- einen Anzeigeblock, der mindestens eine Anzeigevorrichtung enthält, die eine Nullabstandsanzeige des Schwerpunktbereichs zur Wirbelschleppengefährdungszone gewährleistet, und
- einen Warnanzeigeblock, der wenigstens eine Anzeigevorrichtung enthält, die eine Nullabstandsanzeige des Bereichs der prognostizierenden Flugzeugpositionen zur Wirbelschleppengefährdungszone gewährleistet.

Darüber hinaus ist es gemäß der Erfindung wünschenswert, dass das System zur Bewertung der Pilotenhandlungen eine Einrichtung zum Speichern von Daten über die Koordinaten der Kontrollfläche, des Bereichs der prognostizierenden Flugzeugpositionen und der Wirbelgefährdungszonen umfasst, die sich in der Umgebung des Flugzeugs mindestens im Laufe der Warnanzeige des Nullabstands des Bereichs der prognostizierenden Flugzeugpositionen zur Wirbelgefährdungszone halten.

Im Weiteren wird die Erfindung durch Ausführungsbeispiele, die die Anwendung der Erfindung nicht beschränken und den Erfindungsrahmen nicht sprengen, und durch beigefügte Zeichnungen erläutert, die zeigen in:
- Fig. 1: ein Ausführungsbeispiel eines Blockschaltbilds eines Simulators gemäß der Erfindung, der an die Trainingsnavigation in der Wirbelgefährdungssituation angepasst ist,
- Fig. 2: ein Ausführungsbeispiel eines Blockschaltbilds des Simulators gemäß der Erfindung, der an die Trainingsnavigation, in der der auszubildende Pilot über einen prognostizierten, möglichen Einflug in die Wirbelschleppengefährdungszone informiert wird, angepasst ist,
- Fig. 3: ein Ausführungsbeispiel eines Blochschaltbilds des Simulationsmoduls der Wirbelsituation und der Einwirkung der Wirbelströme auf das Flugzeug,
- Fig. 4: ein Ausführungsbeispiel eines Blockschaltbilds des Warnmoduls und dessen Zusammenwirkung mit anderen Modulen des Simulators,
- Fig. 5: ein Ausführungsbeispiel eines Blockschaltbilds des Moduls der Wirbelgefährdungszone und
- Fig. 6: eine schematische Darstellung der Informationen, die das Warnmodul zur Verfügung stellt, und eine Variation der Darstellung auf dem Display der Ortungskarte.

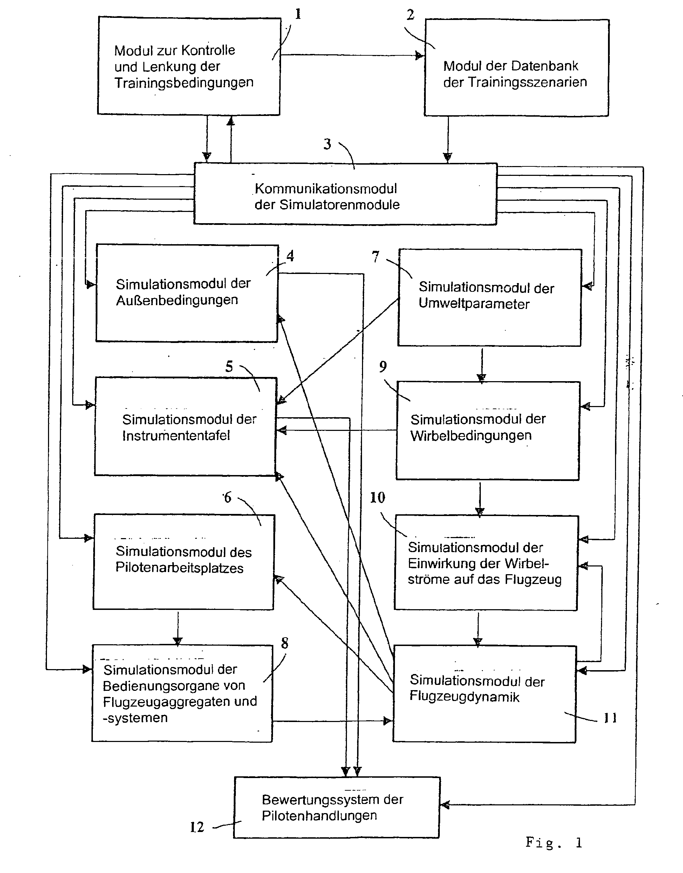

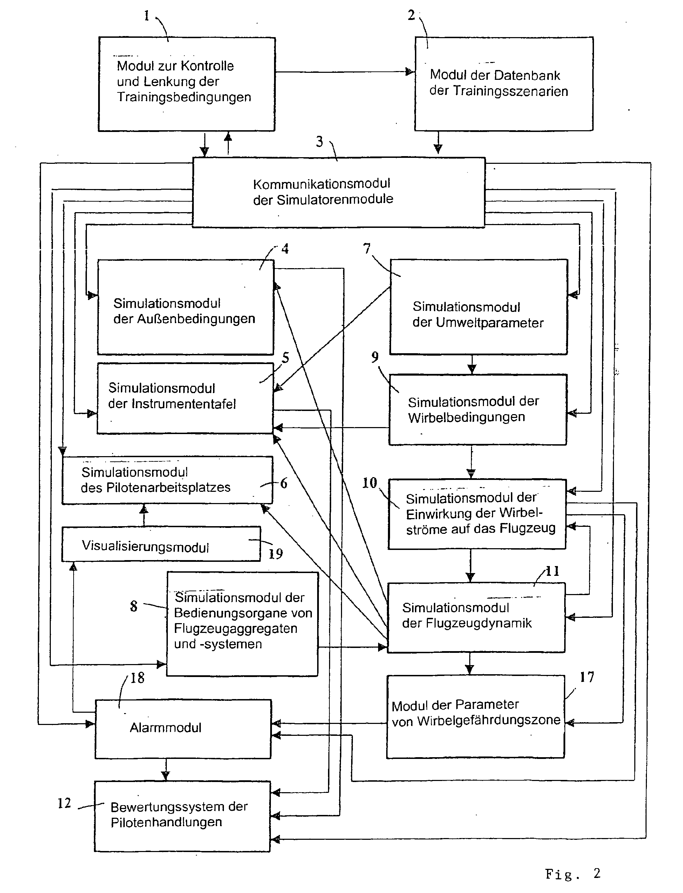

Als Ausführungsbeispiel des Simulators gemäß der Erfindung werden der Simulator, der an die Trainingsnavigation des Flugzeugs in der Wirbelgefährdungssituation (Fig. 1) angepasst ist, und der Simulator, der an das Training angepasst ist, in dem der Pilot über einen prognostizierenden, möglichen Einflug in die Wirbelschleppengefährdungszone informiert wird (Fig. 2), betrachtet.

Die Simulatoren (Figuren 1, 2) umfassen ein Modul 1 zur Kontrolle und Lenkung der Trainingsbedingungen, ein Modul 2 der Datenbank mit Trainingsszenarien und ein Modul 3 zur Kommunikation der Module und die Auswahl eines Trainingsszenarios, wobei die Zusammenwirkung aller Module nach dem ausgewählten Szenario sowie ggfs. der Korrektur ihrer Arbeit bei einer Änderung der Flugparameter gewährleistet wird.

Ein Kommunikationsmodul 3 übermittelt Informationen entsprechend dem Trainingsszenario an ein Simulationsmodul 4 der Außenumgebung, ein Simulationsmodul 5 der Instrumententafel, ein Simulationsmodul 6 des Pilotenarbeitsplatzes und ein Simulationsmodul 7 der Umweltparameter und schaltet ein Simulationsmodul 8 der Bedienungsorgane, ein Simulationsmodul 9 der Wirbelsituation, ein Simulationsmodul 10 der Einwirkung der Wirbelströme auf das Flugzeug, ein Simulationsmodul 11 der Flugzeugdynamik sowie ein System zur Bewertung der Pilotenhandlungen ein.

Das Simulationsmodul 7 der Umweltparameter übermittelt dem Simulationsmodul 5 der Instrumententafel Informationen über die Geräteanzeige, die dem ausgewählten Szenario entspricht, und dem Simulationsmodul 9 der Wirbelsituation Informationen über Stärke und Richtung der Lokalwindgeschwindigkeit, das Windprofil nach der Höhe, die Turbulenz und den Typ der Abschirmfläche.

Das Modul 9 erhält vom Modul 2 der Datenbank mit den Trainingsszenarien Informationen über den Typ des Wirbelerzeugers, der sich im das Flugzeug umgebenden Raum befindet, über die Bewegungsrichtung, Winkelgeschwindigkeit und Koordinaten der Bahnpunkte des Wirbelerzeugers, speichert diese ab und bestimmt dann die Wirbelschleppenbahn und -intensität als Gesamtheit der Punkte von Wirbelbereichsmittelpunkten beispielsweise unter Verwendung von Rechenalgorithmen, wie des bekannten Algorithmus Northwest Research Associates, Inc., Aircraft Vortex Spacing System (AVOSS), Algorithm Version 3.1.1, oder von anderen Algorithmen, die eine Berechnung der Koordinaten der Wirbelmittelpunkte aufgrund der Integration einer Differentialgleichung, die Ausbreitung und die Alterung der Wirbelbereiche im Raum und in der Zeit beschreiben, gewährleisten. Das Modul 9 speichert diese Daten ab und übermittelt diese dann zu einem Simulationsmodul 10 der Wirbelstromeinwirkung auf das Flugzeug.

Das Modul 10 errechnet laufend aus den Daten des Moduls 9, aus Informationen über den Flugzeugtyp, dessen Konfiguration, die Position, Koordinaten, Bewegungs- und Winkelgeschwindigkeit aus dem Modul 2 sowie aus Daten über die auf das Flugzeug im laufenden Zeitpunkt wirkenden Kräfte vom Simulationsmodul 11 der Flugzeugdynamik erkannte, wirbelinduzierende Zusatzkräfte und -momente und übermittelt diese Information zum Simulationsmodul der Flugzeugdynamik, der die Kräftewirkung entsprechend simuliert und zum Simulationsmodul 6 des Pilotenarbeitsplatzes übermittelt. Diese Zusatzkräfte und -momente ändern in Übereinstimmung mit geänderten, kinematischen Parametern des Flugzeugs die Geräteanzeige des Moduls 5 und das Außenbild des Moduls 4.

Gemäß der Erfindung werden auch Kraftorgane des Simulationsmoduls 8 der Lenkungsorgane von Flugzeugaggregaten und -systemen nach simulierten Parametern zur Erstellung von Kräften beansprucht, die den wirklichen Flugbedingungen entsprechen. Falls das Simulationsmodul 6 des Pilotenarbeitsplatzes gemäß der Erfindung mit dem Bewegungssystem (Freiheitsgrad) ausgestattet wird, können diese Kräfte als Sitzneigung, Schwingungen, Vibrationen simuliert werden, wodurch ermöglicht wird, eine angemessene Aufnahme dieser Wirkungen mit der Erstellung eines Bilds ihrer Entstehungsquelle und die Verfolgung der logischen Verbindung der Wirkungen mit einer Änderung der Geräteanzeige auf der Instrumententafel zu entwickeln. Der Flugschüler trifft eine Entscheidung über eine Änderung der Flugzeugposition und über das Manöver, wobei er Lenkungsorgane des Moduls 8 betätigt. Die Information über die Betätigung wird zum Simulationsmodul 11 der Flugzeugdynamik und weiter auf die Instrumententafel übermittelt, wobei die Geräteanzeige geändert wird. Dann werden die Pilotenhandlungen von einem System 12 zur Bewertung der Pilotenhandlungen, beispielsweise mittels eines Vergleichs der Musteranzeige der Geräte mit den infolge der Pilotenhandlungen erzielten Anzeigen ausgewertet.

Der Flugsimulator gemäß der Erfindung kann ein Simulationsmodul für optische und dynamische Effekte sowie Lärmeffekte enthalten, wodurch die Ausbildung gefördert wird.

Das System 12 zur Bewertung der Pilotenhandlungen kann beispielsweise am Arbeitsplatz des Fluglehrers angeordnet sein, wobei dieses System Daten über die Flugzeugparameter, den Verlauf des Trainingflugs empfangen und eine Flugdatenbearbeitung im Rechner des Fluglehrers durchführen sowie auf Anfrage des Fluglehrers in dessen Vorrichtung zur Datenabbildung Pilotenhandlungen abbilden und eine dreidimensionale Abbildung der simulierten Zone des Trainingflugs, beispielsweise unter Berücksichtigung der gegenseitigen Positionen aller dort befindlichen Flugzeuge, oberirdischen und Wirbelschleppenerzeuger im Luftraum, erstellen kann.

Dabei können im Flugsimulator gemäß der Erfindung die Module 4-8 beispielsweise im Cockpit des wirklichen Flugzeugs angeordnet sein, was für den auszubildenden Piloten wirkliche Flugbedingungen schafft, und die Module 1-3, 12 können beispielsweise am Arbeitsplatz des Fluglehrers zur Kontrolle des Trainingsverlaufs und zur möglichen Korrektur der Trainingsszenarien angeordnet sein. Die Anordnung der Simulationsmodule 9-11 kann frei ausgewählt werden.

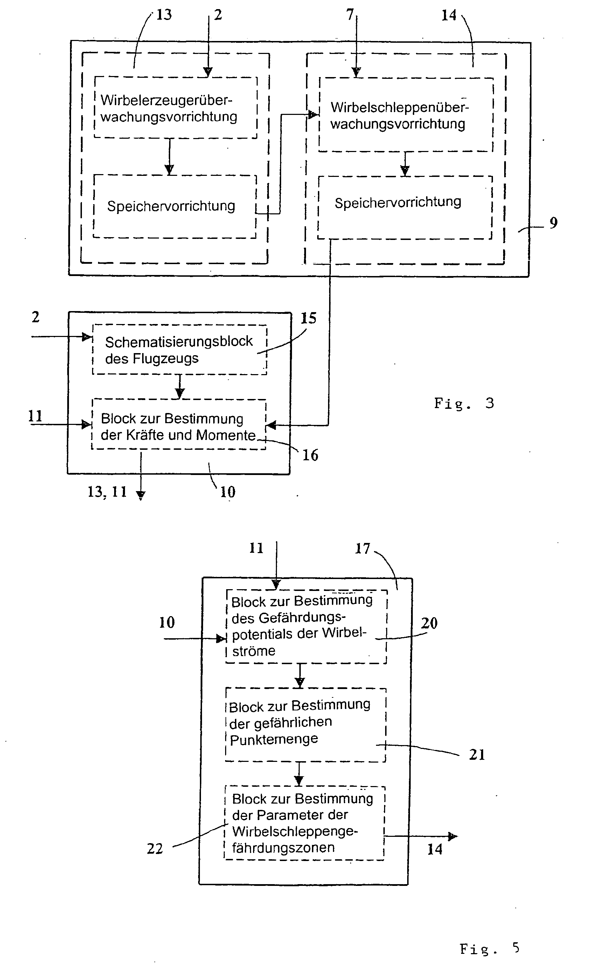

In Fig. 3 ist ein Ausführungsbeispiel der Module 9 und 10 sowie deren Zusammenwirkung gezeigt. Das Simulationsmodul 9 der Wirbelsituation kann den Simulationsblock 3 der Wirbelerzeugerdynamik, der den Wirbelerzeuger überwacht und Daten über den Wirbelerzeugertyp, dessen geometrische Charakteristik und Massencharakteristik sowie dessen Position im laufenden Zeitpunkt vom Modul 2 der Datenbank mit Trainingsszenarien erhält und die Koordinaten der Bahnpunkte und die Wirbelerzeugergeschwindigkeit abspeichert, und einen Simulationsblock 14 der Wirbelschleppendynamik, der aus Daten eines Blocks 15 und dem Simulationsmodul 7 der Umweltparameter die Wirbelschleppenbahn und -intensität als Gesamtheit der Punkte von Wirbelbereichsmittelpunkten errechnet und die Koordinaten der Bahnpunkte und die Wirbelschleppenintensität im laufenden Zeitpunkt abspeichert, enthalten.

Das Simulationsmodul 10 der Wirbeleinwirkung auf das Flugzeug (Fig. 3) kann gemäß der Erfindung den Schematisierungsblock 15 des Flugzeugs, der aus Daten über die Konfiguration, Koordinaten, Bewegungsgeschwindigkeit, Stampf-, Wind- und Krängungswinkel des Flugzeugs vom Modul 2 der Trainingsszenarien die gesamte, geometrische Flugzeugcharakteristik errechnet, die für die Berechnung der auf das Flugzeug wirkenden, darunter auch wirbelindizierenden Kräfte und Momente erforderlich sind, und einen Block 16 zur Bestimmung der Kräfte und Momente umfassen, der die aerodynamischen Kräfte und Momente aufgrund von Informationen des Simulationsblocks 14 der Wirbelschleppendynamik, des Flugzeugschematisierungsblocks 15 und des Simulationsmoduls 11 der Flugzeugdynamik errechnet.

Der Flugsimulator zum Training mittels der Piloteninformation über einen prognostizierenden, möglichen Einflug in die Wirbelschleppengefährdungszone (Fig. 2) umfasst zusätzlich zu den beschriebenen Modulen ein Modul 17 der Parameter der Wirbelgefährdungszone, das die geometrischen Parameter derjenigen Raumzone bestimmt, die nach dem Gefährdungskriterium der wirbelinduzierenden Wirkung für das Flugzeug gefährlich ist, und ein Warnmodul 18, der die Gefährdungszonen im vom Flugzeug in die ausgewählte Vorhaltezeit geflogenen Vorhalteabstand vor dem Flugzeug simuliert. Zum Warnen im prognostizierenden Zeitpunkt simuliert das Warnmodul 18 eine vor dem Flugzeug im Vorhalteabstand liegende Kontrollfläche, Punkte der prognostizierenden Überschneidung des Flugzeugs mit der Kontrollfläche und Bereiche der prognostizierender Flugzeuglage bei der Überschneidung des Flugzeugs mit der Kontrollfläche, darunter auch die räumliche Konfiguration des Flugzeugs, und Überschneidungspunkte der Wirbelschleppenbahnen mit der Kontrollfläche und erstellt die angegebenen Gefährdungszonen um diese Überschneidungspunkte. Dabei überwacht das Modul 18 eine mögliche Überschneidung der Kontrollfläche des Bereichs der prognostizierenden Positionen mit der Wirbelgefährdungszone und übermittelt dem Piloten ein Warnanzeigesignal. Das Modul 18 sieht auch eine Simulation des Schwerpunktbereichs in der Kontrollfläche vor, der in Bezug auf die Abmessungen den Bereich der prognostizierenden Positionen überschreitet. Die im Schwerpunktbereich befindlichen Wirbelgefährdungszonen warnen den Piloten vor einem möglichen Einflug in die Gefährdungszone.

Gemäß der Erfindung kann der Flugsimulator mit einem Modul 19 zur Visualisierung der erhaltenen Daten ausgestattet sein, damit der Pilot das schematische Bild der Wirbelsituation um das Flugzeug herum angemessen verstehen und die prognostizierende Situation ändern kann.

In Fig. 4 ist ein Blockschaltbild der Zusammenwirkung der Module zur Ausbildung des Piloten mittels der Information über die Wirbelsituation gezeigt. Dabei bearbeitet das Modul 17 der Parameter der Wirbelgefährdungszone in der in Fig. 5 gezeigten Ausführung die laufenden Informationen folgendermaßen:
Ein Block 20 zur Bestimmung des Gefährdungspotentials wertet die Wirbelgefährdung im vorgegebenen Raumpunkt nach dem festgelegten Gefährdungskriterium von wirbelinduzierenden Zusatzkräften und -momenten aus Daten des Blocks 16 zur Bestimmung der Kräfte und Momente und des Simulationsmoduls 10 der Wirbeleinwirkung auf das Flugzeug aus. Gemäß der Erfindung kann als Gefährdungskriterium beispielsweise das Krängungsmoment oder der Krängungswinkel des Flugzeugs ausgewählt werden.

Ein Block 22 zur Bestimmung der Wirbelgefährdungszone berechnet die geometrische Charakteristik der Gefährdungszone aus Daten des Blocks zur Bestimmung der Menge von Gefährdungspunkten und übermittelt eine Information darüber dem Warnmodul.

Gemäß der Erfindung kann dabei das Modul 17 der Parameter von Wirbelgefährdungszone eine Datenbank mit der Charakteristik der Wirbelschleppengefährdungszone unterschiedlicher Wirbelerzeugertypen enthalten, wodurch die Bearbeitungszeit der gelieferten Daten wesentlich reduziert wird.

Das Warnmodul 18 (Fig. 4) bildet gemäß der Erfindung Informationen, die zur angemessenen Bewertung der Wirbelsituation im Luftraum vor und um das Flugzeug durch den Piloten erforderlich sind.

Dabei wählt ein Block 23 des Moduls 18 die Vorhaltezeit aus, in der mindestens ein Manöver zur Flugbahnänderung, um vor der Wirbelschleppe nach der Warnung über einen möglichen Einflug auszuweichen, durchgeführt werden kann. Gemäß der Erfindung kann die Vorhaltezeit im laufenden Betrieb per Hand, halb- oder vollautomatisch unter Berücksichtigung der Pilotenqualifikation bzw. Besonderheiten des Trainingflugs korrigiert werden. Die Einstellung kann vom Piloten selbst oder vom Fluglehrer vorgenommen werden, wodurch das Training erleichtert oder erschwert werden kann.

Danach errechnet ein Simulationsblock 24 der Kontrollfläche aufgrund von Daten des Moduls 11 über die Koordinaten, Bewegungsgeschwindigkeit, Stampf-, Wind- und Krängungswinkel des Flugzeugs und Daten des Blocks 23 über die gewählte Vorhaltezeit den Vorhalteabstand, der dem in der Vorhaltezeit vom Flugzeug geflogenen Abstand gleich ist, simuliert die im Vorhalteabstand vor dem Flugzeug senkrecht zu seiner Bewegungsrichtung liegende Kontrollfläche, beispielsweise in Form von Faktoren der Flächengleichung, im prognostizierenden Zeitpunkt ihrer Überschneidung im Inertialkoordinatensystem.

Ein Prognoseblock 25 bestimmt aus Daten des Moduls 13 über die Wirbelschleppenbahn und -intensität als Bahnengesamtheit von Mittelpunkten des Wirbelbereichs und aus Daten des Moduls 23 über die Vorhaltezeit die Wirbelschleppenbahn und - intensität im prognostizierenden Zeitpunkt der Überschneidung des Flugzeugs mit der Kontrollfläche im Inertialkoordinatensystem. Ein Rechnungsblock 26 der Überschneidungspunkte errechnet aus Daten der Blöcke 25 und 24 die Koordinaten der Überschneidungspunkte der Wirbelschleppenbahn mit der Kontrollfläche im prognostizierenden Zeitpunkt der Überschneidung des Flugzeugs mit der Kontrollfläche.

Ein Block 27 zur Erstellung von Zonen und Bereichen erstellt aus Daten des Blocks 26 und des Moduls 17 um den Überschneidungspunkt der Wirbelschleppenbahn mit der Kontrollfläche eine Wirbelschleppengefährdungszone, bei deren Überschneidung die Bewegungsparameter des Flugzeugs die zulässige Grenzen überschreiten können, erstellt in der Kontrollfläche einen Bereich der prognostizierenden Flugzeugpositionen unter Verwendung festgelegter Flugdurchführungsnormen im prognostizierenden Überschneidungszeitpunkt des Flugzeugs mit der Kontrollfläche, erstellt um den Bereich der prognostizierenden Flugzeugpositionen einen Schwerpunktbereich, um dem Piloten Informationen über eine Überschneidung des Flugzeugs mit der Wirbelschleppenbahn zu übermitteln. Gemäß der Erfindung kann der Block 27 eine laufende Koordinatenkorrektur des Bereichs der prognostizierenden Flugzeugpositionen und des Schwerpunktbereichs durchführen, was für den Piloten bei der Koordinierung des Ausweichmanövers mit der Flugaufgabe wichtig ist.

Ein Übergangsblock 28 errechnet die Koordinaten des Bereichs der prognostizierenden Flugzeugpositionen, der Wirbelschleppengefährdungszone und des Schwerpunktbereichs im mit dem Flugzeug gekoppelten Koordinatensystem.

Danach bestimmt ein erster Prüfblock 29 der Überschneidungsbedingungen den Abstand des Schwerpunktbereichs zur Wirbelschleppengefährdungszone und überwacht den Nullabstand; ein zweiter Prüfblock 30 bestimmt den Abstand des Bereichs der prognostizierenden Flugzeugpositionen zur Wirbelschleppen-gefährdungszone und überwacht den Nullabstand.

Die Daten über den Nullabstand der angegebenen Abstände werden einem Anzeigeblock 31 und einem Wamanzeigeblock 32 übermittelt, die Anzeigevorrichtungen umfassen, die im Simulationsmodul 5 der Instrumententafel und/oder im Simulationsmodul 6 des Pilotenarbeitsplatzes, beispielsweise im wirklichen Cockpit des Flugzeugs, angeordnet werden. Beispielweise spricht die Audioanzeigevorrichtung am Pilotenarbeitsplatz erst dann an, wenn der Abstand des Schwerpunktbereichs zur Wirbelschleppengefährdungszone Null ist; dann spricht die Vorrichtung der Tastenwarnanzeige in den Griffen des Pilotensitzes an, wenn der Abstand des Bereichs der prognostizierenden Flugzeugpositionen zur Wirbelschleppengefährdungszone Null ist. Die Tastenanzeige soll den Piloten veranlassen, dringende Maßnahmen zu einem Ausweichmanöver vor der Wirbelschleppengefährdungszone zu treffen. Dabei verfügt der Pilot über Zeit zum Manövrieren, die vom Benutzer unter Berücksichtigung der Flugzeuggeschwindigkeit vorgegeben wird. In Abhängigkeit von der laufenden Situation kann die Vorhaltezeit nach dem Empfang der ersten Anzeige vom Piloten beispielsweise per Hand durch die Einstellung eines Zahlenparameters bzw. automatisch durch die Einstellung einer Bedingung der Zeitänderung korrigiert werden.

Mit einer Vergrößerung der angegebenen Abstände hört die Anzeige auf, wodurch die Vermeidung der gefährlichen Situation angedeutet und der Stress beim Piloten abgeschwächt wird.

Gemäß der Erfindung ist es sinnvoll, Informationen über die gegenseitige Position des Bereichs der prognostizierenden Flugzeugpositionen und der Wirbelschleppengefährdungszone in der Kontrollfläche im prognostizierenden Zeitpunkt im Modul 19 für die Benutzer, den Flugschüler und -lehrer, zu visualisieren, beispielsweise auf dem Display oder auf der Ortungskarte des Flugzeugs, wobei die Lage der Gefährdungszonen zur Begrenzung des für den Piloten nicht aktuellen Informationsumfangs erst nach der Überschneidung der Gefährdungszone mit dem Schwerpunktbereich visualisiert wird.

Gemäß der Erfindung kann das Modul 17 der Wirbelgefährdungszone, wie aus Fig. 5 ersichtlich ist, die Blöcke 20, 21 und 22 umfassen. Der Block 20 zur Bestimmung der Wirbelgefahr bestimmt aus Daten des Simulationsmoduls 10 über die wirbelinduzierenden Kräfte und Momente und über die Parameter, Konfiguration, Lage und Geschwindigkeit des Flugzeugs vom Simulationsmodul 11 der Flugzeugdynamik Punkte in den Wirbelzonen, in denen die wirbelinduzierenden Kräfte und Momente im prognostizierenden Zeitpunkt für das Flugzeug gefährlich sein können, nach dem im Szenario gewählten Gefährdungskriterium, beispielsweise nach dem Krängungsmoment oder -winkel des Flugzeugs. Der Block 21 bestimmt die Raumpunkte, die zur Wirbelschleppengefährdungszone gehören, und der Block 22 zur Bestimmung der Parameter der Wirbelschleppengefährdungszone errechnet die geometrische Charakteristik der Gefährdungszone als Punktegesamtheit. Gemäß der Erfindung ist es wünschenswert, dass das Modul 13 der Parameter der Gefährdungszone derart ausgeführt wird, dass die Grenzen der Gefährdungszone angepasst werden können. Die Daten über die Parameter der Gefährdungszone werden dann dem Warnmodul übermittelt, mit dem oben beschriebenen Verfahren analysiert und können dann zum Visualisierungsmodul zur Abbildung und Anzeige des Einflugs übermittelt werden. Als Visualisierungsvorrichtung kann beispielsweise das Display dienen.

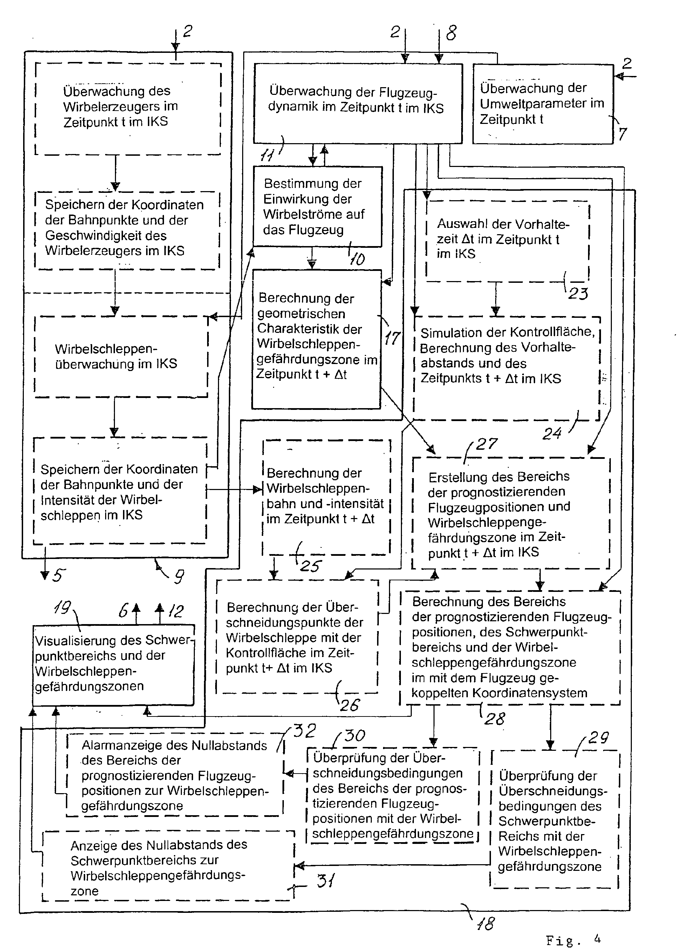

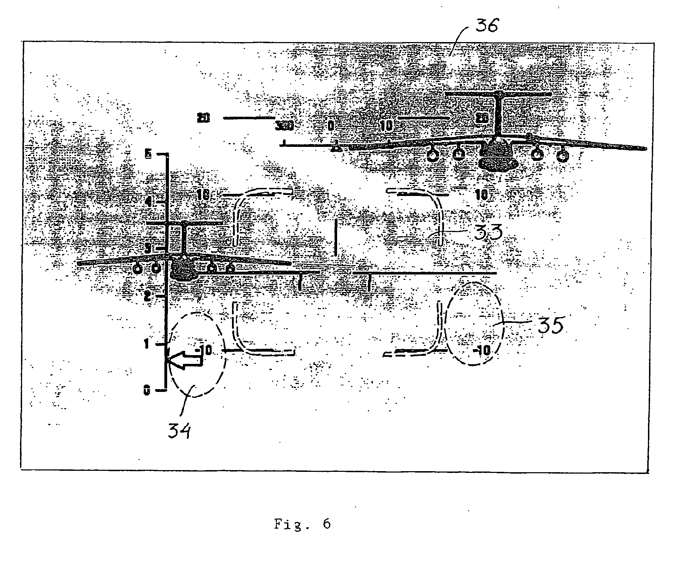

In Fig. 6 ist das Display der Ortungskarte abgebildet, das den Flugzeugkurs und die vom Navigationsträgheitssystem, beispielsweise vom amerikanischen Airborn Inertial Naviation System (AINS), erzeugte Symboldarstellung mit einem Abbildungsbeispiel eines Bereichs 33 der prognostizierenden Flugzeugpositionen und von Wirbelschleppengefährdungszonen 34, 35 im prognostizierenden Zeitpunkt anzeigt. Der Bereich 33 kann beispielsweise die Form eines Rechtecks aufweisen, dessen Abmessungen den Abmessungen der möglichen Flugzeugposition im Raum proportional sind. Die Grenzen des Schwerpunktbereichs sind auf dem Display nicht abgebildet, da es gemäß der Erfindung zweckmäßig ist, die Darstellung der Wirbelschleppengefährdungszonen mit einer gleichzeitigen, akustischen Anzeige abzubilden, wenn die Wirbelschleppen den Schwerpunktbereich überschneiden. Deswegen ist auf dem Display nur ein Schwerpunktbereich 36 dargestellt. Die Darstellung der Wirbelschleppengefähräungszonen 34, 35 kann beispielsweise die Form eines Kreises oder einer anderen geometrischen Figur für eine bequeme, visuelle Aufnahme aufweisen. Dabei kann die Abbildung von einer visuellen Anzeige der Bereiche oder deren Grenzen 33, 34, 35, beispielsweise von einer Licht- oder Farbanzeige, und im Fall der Überschneidung der Grenze des Bereichs 33 mit der Grenze, beispielsweise der Gefährdungszone 35, von einer akustischen Wamanzeige, beispielsweise auf der Instrumententafel oder auf dem Display, bzw. von einer Tastenanzeige am Griff des Pilotensitzes begleitet werden.

Obwohl in dem beschriebenen Beispiel nur einer der Wirbelerzeuger dargestellt und das Verhalten nur einer Wirbelgefährdungszone visualisiert und induziert wird, werden selbstverständlich alle Wirbelerzeuger, die sich in dem das Flugzeug umgebenden Raum befinden, erfasst und auf dem Display nur die Wirbelschleppengefährdungszonen abgebildet, die für das Flugzeug eine Gefahr darstellen. Dabei kann der Pilot aufgrund der Bewertung der schematisch abgebildeten Position potentieller Gefährdungszonen eine angemessene Entscheidung über das Flugzeugmanöver treffen, um die Wirbelgefährdungszonen zu vermeiden.

Der Einsatz des Flugsimulators gemäß der Erfindung schafft eine wirklichkeitsnahe Aufnahme der Wirbelsituation, der Einwirkungen von wirbelinduzierenden Kräften und Momenten auf das Flugzeug und das Verstehen möglicher Folgen des Einflugs in die Wirbelgefährdungszone. Der Vorteil des beschriebenen Flugsimulators besteht darin, dass der Pilot über die benötigten Daten der Wirbelschleppen verfügt, die zum wirksamen Ausweichmanöver ausreichend sind. Durch die nach der Erfindung erfolgende Vorbearbeitung von Daten über die Wirbelschleppe kann der Umfang induzierter Daten reduziert werden, und es bleiben nur die benötigten Informationen. Dabei wird gewährleistet, dass der auszubildende Pilot Daten über die räumliche Flugzeugposition bezüglich der Wirbelschleppe im prognostizierenden Zeitpunkt, über eine Änderung der auf das Flugzeug wirkenden Kräfte und Momente, die von der Konfigurationsänderung des Flugzeugs verursacht werden, erhält und dass die Arbeitsschritte der Module an die Bedingungen der Außenumgebung gemäß den Szenarien und an den Betrieb der Flugzeugeinrichtung angepasst werden.

Gemäß der Erfindung können die Trainingsszenarien aus den Inhalten gewählt werden, die das Starten und Landen vom bzw. im Flughafen, das Starten und Landen vom bzw. auf dem Flugzeugträger, den Einzelflug, Gruppenflug, das Lufttanken und den Sichtflug in niedrigen Höhen mit einer Überwachung der Geländegestaltung umfassen, wodurch unterschiedliche Navigationserfahrungen in einem Flugsimulator entwickelt werden können. Dabei kann das System gemäß der Erfindung zur Bewertung der Pilotenhandlungen eine Speichervorrichtung der Daten über die Koordinaten der Kontrollfläche, des Bereichs der prognostizierenden Flugzeugpositionen und der in der Flugzeugumgebung befindlichen Wirbelschleppengefährdungszonen mindestens im Laufe der Warnanzeige des Nullabstands des Bereichs der prognostizierenden Flugzeugpositionen zur Wirbelschleppengefährdungszone enthalten, was für die Pilotenzulassung und -qualifikation sowie zum Datendekodieren des Flugschreibers sehr hilfreich ist.

Für die Fachleute im Bereich der Luftfahrtelektronik und des Flugsimulatorenbaus sollte klar sein, dass in den Flugsimulator gemäß der Erfindung Verbesserungen eingebracht werden können, die den Rahmen der Ansprüche dieser Erfindung nicht sprengen. Die Verbesserungen können beispielsweise eine andere Ausstattung unterschiedlicher Flugzeugtypen, andere Trainingsszenarien für unterschiedliche Flugzeugtypen, eine Anwendung unterschiedlicher Verfahren und Vorrichtungen zur Anzeige und Visualisierung der dem Piloten gelieferten Daten und eine Änderung der Informationsflüsse in Abhängigkeit von der technischen Simulatorenausstattung betreffen.

### Industrielle Anwendbarkeit

Der Flugsimulator gemäß der Erfindung kann in der Software sowohl einzelner Module als auch in einem modularen System mittels Rechenvorrichtungen und Personalcomputern ausgeführt werden. Dabei ist es offensichtlich, dass in einem Flugsimulator mehrere Ausbildungsarbeitsplätze mit Variationen der Trainingsszenarien angeordnet sein können.

## Patentansprüche

1. Flugsimulator zur Navigationsausbildung in gefährlichen Wirbelsituationen, der Folgendes umfasst:
- ein Modul (1) zur Kontrolle und Lenkung der Trainingsbetriebsbedingungen, das Trainingsszenarien auswählen und die Funktion der Module prüfen kann,
- ein Modul (2) der Datenbank mit Trainingsszenarien,
- ein Modul (3) zur Kommunikation der Module des Simulators,
- ein Simulationsmodul (4) der Außensituation, des sichtbaren Luftraumteils und der Erde in Echtzeit,
- ein Simulationsmodul (6) des Pilotenarbeitsplatzes,
- ein Simulationsmodul (5) der Instrumententafel mit Anzeigegeräten der Motorenbetriebe,
- ein Simulationsmodul (8) der Lenkungsorgane von Flugzeugaggregaten und
- systemen,
- ein Simulationsmodul (7) der Umgebungsparameter,
- ein Simulationsmodul (9) der Wirbelsituation, das aus Daten des Moduls der Trainingsszenarien über die Wirbelerzeugerparameter und aus Daten des Simulationsmoduls der Umgebungsparameter die Wirbelschleppenbahn und
- intensität als Gesamtheit der Mittelpunkte von Wirbelbereichen bestimmen kann,
- ein Simulationsmodul (10) der Einwirkung von Wirbelströmen auf das Flugzeug, wobei dieses Modul aus Daten des Wirbelsimulationsmoduls (9) über die Wirbelschleppenbahn und -intensität und aus Daten des Moduls (2) der Datenbank mit Trainingsszenarien über die Parameter des Flugzeugs und aus Daten eines Simulationsmoduls (11) der Dynamik des Flugzeugs über die Position, Bewegungs- und Winkelgeschwindigkeit sowie die geometrische Charakteristik des Flugzeugs die wirbelinduzierenden Zusatzkräfte und -momente bestimmen kann,
- das Simulationsmodul (11) der Flugzeugdynamik, das aus Daten des Simulationsmoduls (10) der Wirbeleinwirkungen auf das Flugzeug, aus Daten des Moduls (2) der Datenbank mit Trainingsszenarien und aus Daten des Simulationsmoduls (8) der Lenkungsorgane Signale erzeugen kann, die die einwirkenden Kräfte und Momente nach einem Trainingsszenario sowie die wirbelinduzierenden Zusatzkräfte und -momente simulieren und Signale in das Simulationsmodul (6) des Pilotenarbeitsplatzes, in das Simulationsmodul (5) der Instrumententafel und in das Simulationsmodul (4) der Außensituation übermitteln kann, und
- ein System zur Bewertung der Pilotenhandlungen, das aus Daten des Simulationsmoduls (4) der visuellen Außensituation und des Simulations-moduls (5) der Instrumententafel die Richtigkeit der Pilotenhandlungen zur Beseitigung der für das Flugzeug gefährlichen Situation bewerten kann.

2. Flugsimulator nach Anspruch 1,
**dadurch gekennzeichnet,**
**dass** das Simulationsmodul (6) des Pilotenarbeitsplatzes mit der Möglichkeit einer Änderung der räumlichen Position dieses Platzes ausgeführt wird und mit einer Einrichtung zur dynamischen Simulation des Flugs ausgestattet ist.

3. Flugsimulator nach Anspruch 1 oder 2,
**dadurch gekennzeichnet,**
**dass** das Simulationsmodul (9) der Wirbelsituation Folgendes umfasst:
- einen Simulationsblock (13) der Wirbelerzeugerdynamik, der eine Vorrichtung zur Überwachung des Wirbelerzeugers aufweist, die Daten über die Position, Bewegungsparameter, geometrische Charakteristik und Massencharakterisitk des Wirbelerzeugers vom Modul (2) mit der Datenbank von Trainingsszenarien empfangen kann,
- eine Speichervorrichtung, die Daten über die Position und Bewegungsparameter des Wirbelerzeugers abspeichern kann,
- einen Wirbelschleppensimulationsblock (14), der eine Überwachungseinrichtung der Wirbelschleppe aufweist, die aus Daten des Simulationsmoduls (7) der Umgebungsparameter und des Simulationsblocks (13) der Wirbelerzeugerdynamik die Wirbelschleppenbahn und -intensität als Bahnengesamtheit der Mittelpunkte von Wirbelbereichen bestimmen kann, und
- eine Speichervorrichtung, die Daten über die Koordinaten der Bahnpunkte und die Wirbelschleppenintensität als Bahnengesamtheit der Mittelpunkte von Wirbelbereichen abspeichern kann,
und **dass** das Simulationsmodul (10) der Einwirkung von Wirbelströmen auf das Flugzeug Folgendes aufweist:
- einen Schematisierungsblock (15) des Flugzeugs, der aus Daten des Moduls (2) der Datenbank mit Trainingsszenarien über den Typ und die Konfiguration des Flugzeugs die Gesamtheit der geometrischen Charakteristik des Flugzeugs, die zur Berechnung der wirbelinduzierenden Zusatzkräfte und -momente erforderlich sind, berechnen kann,
- einen Block (16) zur Bestimmung der genannten Kräfte und Momente aus den im Wirbelschleppensimulationsblock (14) gespeicherten Daten über die Koordinaten der Bahnpunkte und die Wirbelschleppenintensität als Bahnengesamtheit der Mittelpunkte von Wirbelbereichen und aus Daten des Simulationsmoduls (11) der Flugzeugdynamik über die Position, Bewegungs- und Winkelgeschwindigkeit sowie die geometrische Charakteristik des Flugzeugs.

4. Flugsimulator nach einem der Ansprüche 1 bis 3,
**dadurch gekennzeichnet,**
**dass** er zusätzlich ein Simulationsmodul für optische und dynamische Effekte sowie Lärmeffekten enthält.

5. Flugsimulator nach einem der Ansprüche 1 bis 4,
**dadurch gekennzeichnet,**
**dass** er an die Trainingsnavigation angepasst wird, wobei der auszubildende Pilot über einen prognostizierten, möglichen Einflug in die Wirbelschleppengefährdungszone informiert wird, und zusätzlich Folgendes enthält:
- ein Modul (17) der Parameter von Wirbelgefährdungszonen, der Folgendes umfasst:
- einen Block (20) zur Bestimmung der Luftströmungsgefahr, der die Gefahr im vorgegebenen Raumpunkt nach einem festgelegten Gefährdungskriterium der auf das Flugzeug wirkenden, wirbelinduzierenden Zusatzkräfte und -momente aus Daten des Blocks (16) zur Bestimmung der Kräfte und Momente im Simulationsmodul (10) der Einwirkung der Luftstörungen auf das Flugzeug auswerten kann,
- einen Block (21) zur Bestimmung der Menge von gefährlichen Raumpunkten, in denen wirbelinduzierende Zusatzkräfte und -momente eine Gefahr darstellen, wobei dieser Block die Koordinaten der in der Gefährdungszone befindlichen Raumpunkte nach einem Gefährdungskriterium aus Daten des Blocks (20) zur Bestimmung der Wirbelgefahr bestimmen kann,
- einen Block (22) zur Bestimmung der Parameter von Wirbelgefährdungszonen, der diese Parameter aus Daten des Blocks (21) zur Bestimmung der Menge von gefährlichen Raumpunkten errechnen und Informationen darüber übermitteln kann, und dass er ein Warnmodul (18) aufweist, der Folgendes umfasst:
- einen Wählblock (23) der Vorhaltezeit, in der mindestens ein Ausweichmanöver des Flugzeugs vor der Wirbelschleppe nach der Warnung über einen möglichen Einflug in die Wirbelschleppe durchgeführt werden kann,
- einen Simulationsblock (24) der Kontrollfläche, der den Vorhalteabstand, der dem in der Vorhaltezeit von Flugzeug geflogenen Abstand gleich ist, errechnen und eine Kontrollfläche, die im Raum vor dem Flugzeug senkrecht zu dessen Bewegungsrichtung im Vorhalteabstand liegt, erstellen kann sowie den prognostizierenden Zeitpunkt der Überschneidung der Kontrollfläche im Inertialkoordinatensystem bestimmen kann,
- einen Prognoseblock (25), der die Wirbelschleppenbahn als Bahnengesamtheit der Mittelpunkte von Wirbelbereichen und die Wirbelschleppenintensität im prognostizierenden Zeitpunkt im Inertialkoordinatensystem aus Daten des Simulationsblocks der Wirbelschleppen im Simulationsmodul der Wirbelsituation bestimmen kann,
- einen Rechenblock (26) der Überschneidungspunkte, der die Koordinaten der Überschneidungspunkte der Wirbelschleppenbahn mit der Kontrollfläche im prognostizierenden Zeitpunkt der Überschneidung der Kontrollfläche durch das Flugzeug errechnen kann,
- einen Block (27) zur Erstellung von Zonen und Bereichen, der eine Erstellung der Wirbelschleppengefährdungszone um den Überschneidungspunkt der Wirbelschleppenbahn mit der Kontrollfläche, bei deren Überschneidung die Bewegungsparameter des Flugzeugs die zulässigen Grenzen überschreiten können, aus Daten des Moduls der Gefährdungszonenparameter, eine Erstellung des Bereichs der prognostizierenden Flugzeugposition unter Verwendung festgelegter Normen der Flugdurchführung in der Kontrollfläche in der prognostizierenden Zeit der Kontrollflächenüberschneidung, eine Erstellung eines Schwerpunktbereichs um den Bereich der prognostizierenden Positionen und eine Übermittlung der Information über dessen Überschneidung mit der Wirbelschleppengefährdungszone an den Benutzer gewährleistet,
- einen Übergangsblock (28), der die Koordinaten des Bereichs der prognostizierenden Flugzeugpositionen, des Schwerpunktbereichs und der Wirbelschleppengefährdungszone im mit dem Flugzeug gekoppelten Koordinatensystem berechnen kann,
- einen ersten Prüfblock (29) der Überschneidungsbedingungen, der den Abstand vom Schwerpunktbereich zur Wirbelschleppengefährdungszone bestimmen und den Nullabstand festlegen kann,
- einen zweiten Prüfblock (30) der Überschneidungsbedingungen, der den Abstand vom Bereich der prognostizierenden Flugzeugpositionen zur Wirbelschleppengefährdungszone bestimmen und den Nullabstand festlegen kann,
- einen Anzeigeblock (31), der mindestens eine Anzeigevorrichtung enthält, die eine Nullabstandsanzeige des Schwerpunktbereichs zur Wirbelschleppengefährdungszone gewährleistet, und
- einen Warnanzeigeblock (32), der mindestens eine Anzeigevorrichtung enthält, die eine Nullabstandsanzeige des Bereichs der prognostizierenden Flugzeugpositionen zur Wirbelschleppen-gefährdungszone gewährleistet.

6. Flugsimulator nach Anspruch 5,
**dadurch gekennzeichnet,**
**dass** er ein Visualisierungsmodul enthält, das eine Visualisierungsvorrichtung umfasst, die aus Daten des Warnmoduls eine Darstellung mindestens des Bereichs der prognostizierenden Flugzeugpositionen und der Wirbelschleppengefährdungszone abbilden kann.

7. Flugsimulator nach Anspruch 5 oder 6,
**dadurch gekennzeichnet,**
**dass** er eine Vorrichtung zur Anzeige und Warnanzeige umfasst, die aus der Vorrichtungsgruppe der visuellen Anzeige, der Audioanzeige und der Tastenanzeige ausgewählt wird.

8. Flugsimulator nach einem der Ansprüche 5 bis 7,
**dadurch gekennzeichnet,**
**dass** der Wählblock (23) der Vorhaltezeit mit der Möglichkeit einer laufenden Korrektur der Vorhaltezeit mit einer halb-, vollautomatische oder Handeinstellung ausgeführt wird.

9. Flugsimulator nach einem der Ansprüche 5 bis 8,
**dadurch gekennzeichnet,**
**dass** der Block (27) zur Erstellung von Zonen und Bereichen mit der Möglichkeit einer laufenden Korrektur der Koordinaten des Schwerpunktbereichs und des Bereichs der prognostizierenden Flugzeugpositionen mit einer halb-, vollautomatischen und Handeinstellung ausgeführt wird.

10. Flugsimulator nach einem der Ansprüche 5 bis 9,
**dadurch gekennzeichnet,**
**dass** der Block (22) zur Parameterbestimmung der Gefährdungszone mit einer möglichen Schwellenanpassung der Wirbelschleppengefährdungszone ausgeführt wird.

11. Flugsimulator nach einem der Ansprüche 5 bis 10,
**dadurch gekennzeichnet,**
**dass** als Gefährdungskriterium der Wirbelschleppe das zulässige Krängungsmoment des bemannten Flugzeugs ausgewählt wird.

12. Flugsimulator nach einem der Ansprüche 5 bis 10,
**dadurch gekennzeichnet,**
**dass** als Gefährdungskriterium der Wirbelschleppe der zulässige Krängungswinkel des bemannten Flugzeugs ausgewählt wird.

13. Flugsimulator nach einem der Ansprüche 5 bis 10,
**dadurch gekennzeichnet,**
**dass** die Trainingsszenarien aus der Szenariogruppe gewählt werden, die das Starten und Landen vom bzw. im Terminal-Bereich, das Starten und Landen vom bzw. auf den Flugzeugträger, den Einzel- und Gruppenflug sowie das Lufttanken umfasst.

14. Flugsimulator nach einem der Ansprüche 1 bis 13,
**dadurch gekennzeichnet,**
**dass** er in der Software der Simulatorenmodule ausgeführt wird.

15. Flugsimulator nach einem der Ansprüche 1 bis 14,
**dadurch gekennzeichnet,**
**dass** das Modul (7) der Wirbelgefährdungszonenparameter die Datenbank mit der Charakteristik der Wirbelschleppengefährdungszonen unterschiedlicher Wirbelerzeugertypen umfasst.

16. Flugsimulator nach einem der Ansprüche 1 bis 14,
**dadurch gekennzeichnet,**
**dass** das System (12) zur Bewertung der Pilotenhandlungen eine Vorrichtung zum Speichern von Daten über die Koordinaten der Kontrollfläche, den Bereich der prognostizierenden Flugzeugpositionen und der in der Flugzeugumgebung befindlichen Wirbelschleppengefährdungszonen mindestens im Laufe der Alarmanzeige des Nullabstands des Bereichs der prognostizierenden Flugzeugpositionen zur Wirbelschleppengefährdungszone umfasst.
